(19) Europäisches Patentamt
European Patent Office
Office européen des brevets

(11) EP 1 106 617 A2

(12) **EUROPÄISCHE PATENTANMELDUNG**

(43) Veröffentlichungstag:
**13.06.2001 Patentblatt 2001/24**

(51) Int Cl.[7]: **C07F 5/04**, C07F 9/54, H01M 10/40

(21) Anmeldenummer: **00125236.0**

(22) Anmeldetag: **23.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.12.1999 DE 19959722**

(71) Anmelder: **MERCK PATENT GmbH**
**64293 Darmstadt (DE)**

(72) Erfinder:
- **Heider, Udo, Dr.**
  **64560 Riedstadt (DE)**
- **Schmidt, Michael, Dr.**
  **64331 Weiterstadt (DE)**
- **Kühner, Andreas, Dr.**
  **64298 Darmstadt (DE)**
- **Schmenger, Andrea**
  **64560 Riedstadt (DE)**

(54) **Alkylspiroboratsalze zur Anwendung in elektrochemischen Zellen**

(57) Die Erfindung betrifft ein Verfahren zur Herstellung von Boratsalzen und deren Anwendung in elektrochemischen Zellen.

EP 1 106 617 A2

## Beschreibung

Die Erfindung betrifft ein Verfahren zur Herstellung von Spiroboratsalzen und deren Anwendung in elektrochemischen Zellen.

Lithiumionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb. Wiederaufladbare Lithiumbatterien werden seit den frühen neunziger Jahren kommerziell angeboten.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalation und Insertions-Verbindungen verwendet. Anoden können aus Lithium-Metall, Kohlenstoffen, Graphit, graphitischen Kohlenstoffen oder anderen Lithium-Interkalation und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

Mit $LiPF_6$ wird derzeit in vielen Lithiumionen-Batterien eine stark hydrolyseempfindliche und thermisch instabile Substanz als Leitsalz verwendet. Im Kontakt mit der Feuchtigkeit der Luft und/oder Restwasser der Lösungsmittel entsteht sofort Flußsäure HF. Neben den toxischen Eigenschaften wirkt HF negativ auf das Zyklenverhalten und somit auf die Performance der Lithiumbatterie, da Metalle aus den Elektroden herausgelöst werden können.

In US 4505997 werden Lithiumimide und in US 5273840 Lithiummethanide beschrieben. Beide Salze besitzen eine hohe anodische Stabilität und bilden in organischen Carbonaten Lösungen mit hoher Leitfähigkeit. Aluminium, der kathodische Stromableiter in Lithiumionen Batterien, wird zumindest von Lithiumimid in nicht ausreichendem Maße passiviert. Lithiummethanid hingegen läßt sich nur mit sehr großem Aufwand herstellen und reinigen. Zudem hängen die elektrochemischen Eigenschaften wie Oxidationsstabilität und Passivierung von Aluminium sehr stark von der Reinheit des Methanids ab.

Mit Lithiumbis[5-fluoro-2-olato-benzensulfonato(2-)O,O']borat(1-) wird ein Leitsalz beschrieben, das aufgrund seiner Eigenschaften als vielversprechendes Leitsalz zum Einsatz in Lithiumionen-Batterien zu bewerten ist. Problematisch ist jedoch die kostenintensive und komplizierte Synthese der Vorstufen.

Anionische Chelatkomplexe des Boratanions werden in EP 698301 beschrieben. Bei der Verwendung organischer aromatischer Diole oder aromatischer Hydroxysäuren als Liganden werden eine sehr hohe thermische Stabilität und eine gute Delokalisation der negativen Ladung beobachtet. Nachteilig erweist sich die fehlende Oxidationsstabilität bzw. zu geringe Leitfähigkeit in aprotischen Lösungsmitteln, die standardmäßig in elektrochemischen Zellen eingesetzt werden. Die bekannten Spiroborate besitzen eine optimierte Leitfähigkeit bei gleichzeitig unzureichender Oxidationsstabilität oder eine optimierte Oxidationsstabilität bei gleichzeitig unzureichender Leitfähigkeit.

Gegenstand der vorliegenden Erfindung ist es deshalb, Materialien zur Verfügung zu stellen, die eine verbesserte Leitfähigkeit aufweisen und elektrochemisch stabil sind.

Die erfindungsgemäße Aufgabe wird gelöst durch Boratsalze der allgemeinen Formel

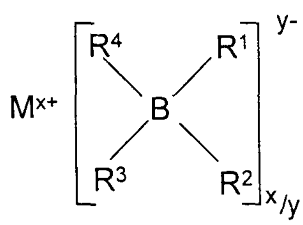

(I)

worin bedeuten:

M ein Metallion, Tetraalkylammoniumion,

$PR^aR^bR^cR^d$, $P(NR^aR^b)_kR^c_mR^d_{4-k-m}$ (mit k=1-4, m=0-3 und k+m≤4), $C(NR^aR^b)(NR^cR^d)(NR^eR^f)$, $C(R^z)_3$, Tropylium oder
Heterocyclen mit P, N, S oder O oder diese enthaltende kondensierte heterocyclische Systeme
mit $R^a$ bis $R^f$ H, Alkyl und Aryl ($C_1$-$C_8$) die teilweise durch F, Cl oder Br substituiert sein können,

$R^z$ Aromaten oder substituierte Aromaten

x,y 1, 2, 3, 4, 5 oder 6

$R^1$ bis $R^4$ gleich oder verschieden, gegebenenfalls durch eine Einfach-oder Doppelbindung direkt miteinander verbunder Alkoxyoder Carboxyreste ($C_1$-$C_8$) sein können.
Ist $M^{x+}$ ein Tetraalkylammoniumion entsprechend der allgemeinen Formel [NR'R"R'"R""] können die Reste R' bis R"" gleich oder verschieden, gegebenenfalls durch eine Einfach- oder Doppelbindung direkt miteinander verbunden sein und die Bedeutung $C_nF_{(2n+1-x)}H_x$ mit n=1-6 und x=0-13 haben.
Besonders geeignet sind Boratsalze entsprechend Formel (I), dadurch gekennzeichnet, daß M, x, y und $R^1$ bis $R^4$ die die oben angegebene Bedeutung haben und
$R^1$ bis $R^4$ optional teilweise oder vollständig durch elektronenziehende Gruppen substituiert sind, ausgewählt aus der Gruppe
F, Cl, $N(C_nF_{(2n+1-x)}H_x)_2$, $O(C_nF_{(2n+1-x)}H_x)$, $SO_2(C_nF_{(2n+1-x)}H_x)$
mit

n 1, 2, 3, 4, 5 oder 6 und

x 0 bis 13.

Überraschend wurde gefunden, daß die erfindungsgemäßen Salze eine sehr hohe elektrochemische Stabilität aufweisen. Die Verbindungen der Formel (I) weisen neben der für Borate typischen thermischen Stabilität gleichzeitig eine hohe Oxidationsstabilität auf.
Es wurde gefunden, daß die erfindungsgemäßen Salze eine hohe ionische Leitfähigkeit in aprotischen Lösungsmitteln aufweisen. Geeignete Lösungsmittel sind die gängigen Batterie-Lösungsmittel, vorzugsweise ausgewählt aus der Gruppe Dimethylcarbonat, Diethylcarbonat, Propylencarbonat, Ethylencarbonat, Ethylmethylcarbonat, Methylpropylcarbonat, γ-Butyrolacton, Methylacetat, Ethylacetat, Methylpropionat, Ethylpropionat, Methylbutyrat, Ethylbutyrat, Dimethylsulfoxid, Dioxolan, Sulfolan, Acetonitril, Acrylnitril, Tetrahydrofuran, 2-Methyl-Tetrahydrofuran und deren Mischungen.
Es können die Boratsalze der Formel (I) und deren Mischungen in Elektrolyten für elektrochemische Zellen verwendet werden. Sie können als Leitsalze oder Additive eingesetzt werden. Ebenso können sie in Anteilen zwischen 1 und 99% in Kombination mit anderen Leitsalzen, die in elektrochemischen Zellen Anwendung finden, verwendet werden. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen.
Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

m und p 0, 1, 2, 3 oder 4 mit m+p=4 und
$R^1$ und $R^2$ gleich oder verschieden sind,

gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann,

haben und

Hal F, Cl oder Br

und

A Alkyl mit 1 bis 6 C-Atomen, das ein- bis dreifach halogeniert sein kann, bedeuten. Ebenso geeignet sind Alkalialkoholate (DE 9910968) der allgemeinen Formel

$$Li^{+}\ OR^{-}$$

worin R

die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

hat und

Hal F, Cl, oder Br,

und

A Alkyl mit 1 bis 6 C-Atomen, das ein- bis dreifach halogeniert sein kann.

Auch Verbindungen der allgemeinen Formel

$$[([R^1(CR^2R^3)_k]_lA_x)_yKt]^{+}\ {}^{-}N(CF_3)_2$$

wobei

Kt N, P, As, Sb, S, Se

A N, P, P(O), O, S, S(O), $SO_2$, As, As(O), Sb, Sb(O)

$R^1$, $R^2$ und $R^3$
gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlossen sein,
Kt kann in cyclischen oder heterocyclischen Ring eingeschlossen sein
die an Kt gebundenen Gruppen können gleich oder verschieden sein,

mit

n 1-18
m 3-7
k 0, 1-6
l 1 oder 2 im Fall von x=1 und 1 im Fall x=0
x 0,1
y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+\,-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+\,-}E$$

wobei
Kt, A, $R^1$, $R^2$, $R^3$, k, l, x und y die oben angegebene Bedeutung haben und
$^-E$ $F^-$, $Cl^-$, $Br^-$, $I^-$, $BF_4^-$, $ClO_4^-$, $AsF_6^-$, $SbF_6^-$ oder $PF_6^-$
bedeutet, umgesetzt wird.

Die erfindungsgemäßen Verbindungen können auch in Elektrolyten enthalten sein, die Verbindungen der Formel

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, m≠0 |
| n | 1-9 |
| k | 0, falls m=0 und k=1, falls m=1-9 |

enthalten, dagestellt dadurch, daß teil- oder perfluorierte Alkysulfonylfluoride mit Dimethylamin in organischen Lösungsmitteln umgesetzt werden (DE 199 466 73).

Auch Lithiumkomplexsalze der Formel

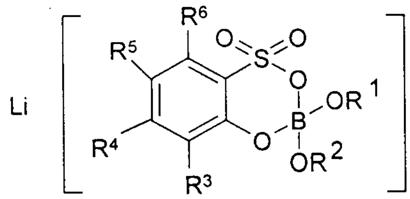

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder

Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen heterocyclischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,

Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Auch Elektrolyte mit Komplexsalzen der allgemeinen Formel (DE 199 51 804)

$$M^{x+}[EZ]^{y-}_{x/y}$$

worin bedeuten:

x, y 1,2,3,4,5,6

$M^{x+}$ ein Metallion

E eine Lewis-Säure, ausgewählt aus der Gruppe

$BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$,

$$OCOR^6,$$

wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Additive wie Silanverbindungen der allgemeinen Formel

$$SiR^1R^2R^3R^4$$

mit $R^1$ bis $R^4$ H

$$C_yF_{2y+1-z}H_z$$

$$OC_yF_{2y+1-z}H_z$$

$$OC(O)C_yF_{2y+1-z}H_z$$

$$OSO_2C_yF_{2y+1-z}H_z$$

und $1 \leq x < 6$
$1 \leq y \leq 8$ und
$0 \leq z \leq 2y+1$
und
$R^1$-$R^4$ gleich oder verschieden

mit der Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, oder

mit der Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können (DE 100 276 26), können enthalten sein.

Die erfindungsgemäßen Verbindungen können auch in Elektrolyte eingesetzt werden, die Lithiumfluoralkylphosphate der folgenden Formel enthalten,

$$Li^+[PF_x(C_yF_{2y+1-z}H_z)_{6-x}]^-$$

worin
$1 \leq x \leq 5$
$3 \leq y \leq 8$
$0 \leq z \leq 2y+1$ bedeuten und die Liganden $(C_yF_{2y+1-z}H_z)$ gleich oder verschieden sein können, wobei die Verbindungen der allgemeinen Formel,

$$Li^{+}[PF_a(CH_bF_c(CF_3)_d)_e]^{-}$$

in der a eine ganze Zahl von 2 bis 5, b = 0 oder 1, c = 0 oder 1, d = 2 und e eine ganze Zahl von 1 bis 4 bedeuten, mit den Bedingungen, daß b und c nicht gleichzeitig jeweils = 0 bedeuten und die Summe aus a + e gleich 6 ist und die Liganden $(CH_bF_c(CF_3)_d)$ gleich oder verschieden sein können, ausgenommen sind (DE 100 089 55). Das Verfahren zur Herstellung von Lithiumfluoralkylphosphaten ist dadurch gekennzeichnet, daß wenigstens eine Verbindung der allgemeinen Formel

$$H_mP(C_nH_{2n+1})_{3-m} \quad (III),$$

$$OP(C_nH_{2n+1})_3 \quad (IV),$$

$$Cl_mP(C_nH_{2n+1})_{3-m} \quad (V),$$

$$F_mP(C_nH_{2n+1})_{3-m} \quad (VI),$$

$$Cl_oP(C_nH_{2n+1})_{5-o} \quad (VII),$$

$$F_oP(C_nH_{2n+1})_{5-o} \quad (VIII),$$

in denen jeweils
$0 < m < 2$, $3 < n < 8$ und $0 < o < 4$ bedeutet
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Verbindungen können auch in Elektrolyten eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16 801). Dargestellt werden die Verbindungen durch Umsetzung von Phosphor (V)-Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^{+}A^{-}$$

worin bedeuten:

$K^+$ ein Kation ausgewählt aus der Gruppe

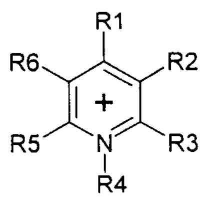
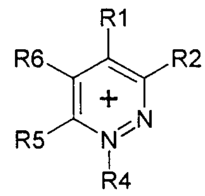

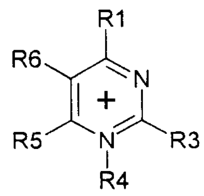
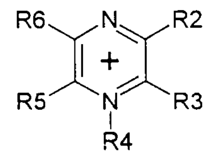

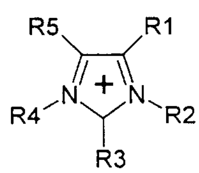
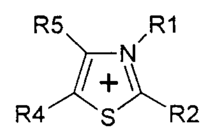

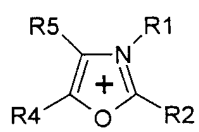
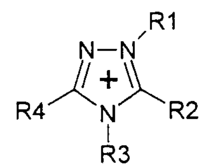

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,
- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und

$A^-$ ein Anion ausgewählt aus der Gruppe

$$[B(OR^1)_n(OR^2)_m(OR^3)_o(OR^4)_p]^-$$

mit 0≤n, m, o, p≤4 und

$$m+n+o+p=4$$

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam
die Bedeutung eines aromatischen Rings aus der Gruppe Phenyl, Naphthyl, Anthracenyl oder Phenanthrenyl, der

unsubstituiert oder ein- oder mehrfach durch $C_nF_{(2n+1-x)}H_x$ mit 1<n<6 und 0<x≤13 oder Halogen (F, Cl, Br) substituiert sein kann, besitzen,
die Bedeutung eines aromatischen heterocyclischen Rings aus der Gruppe Pyridyl, Pyrazyl oder Pyrimidyl, der unsubstituiert oder einoder mehrfach durch $C_nF_{(2n+1-x)}H_x$ mit 1<n<6 und 0<x≤13 oder Halogen oder Halogen (F, Cl, Br) substituiert sein kann, besitzen,
die Bedeutung eines Alkylrests ($C_1$ bis $C_8$) der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1 <n<6 und 0<x≤13 substituiert sein kann, besitzen,
beziehungsweise $OR^1$ bis $OR^4$
einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl, , $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und 1≤x<6
1≤y≤8 und
0≤z≤2y+1 können enthalten sein (DE 100 279 95).

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. - oxihydroxide in das entsprechende Oxid übergeführt werden.

Die erfindungsgemäßen Verbindungen können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind, indem die Partikel in einem organischen Lösungsmittel suspendiert werden, die Suspension mit einer Lösung einer hydrolisierbaren Metallverbindung und einer Hydrolyselösung versetzt und danach die beschichteten Partikel abfiltriert, getrocknet und gegebenenfalls calciniert werden. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Verbindungen in Systemen mit Kathoden eingesetzt werden, die aus Lithium-Mischoxid-Partikeln bestehen, die mit Alkalimetallverbindungen und Metalloxiden einoder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden. Ebenso können die erfindungsgemäßen Verbindungen in Systemen eingesetzt werden, die Anodenmaterialien mit dotiertem Zinnoxid enthalten (DE 100 257 61). Dieses Anodenmaterial wird hergestellt indem

a) eine Zinnchlorid-Lösung mit Harnstoff versetzt wird,

b) die Lösung mit Urotropin und einer geeigneten Dotierverbindung versetzt wird,

c) das so erhaltene Sol in Petrolether emulgiert wird,

d) das erhaltene Gel gewaschen und das Lösungsmittel abgesaugt sowie

e) das Gel getrocknet und getempert wird.

Ebenso können die erfindungsgemäßen Verbindungen in Systemen eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,

b) die Lösung mit Urotropin versetzt wird,

c) das so erhaltene Sol in Petrolether emulgiert wird,

d) das erhaltene Gel gewaschen und das Lösungsmittel abgesaugt wird,

e) das Gel getrocknet und getempert wird und

f) das erhaltene $SnO_2$ in einem begasbaren Ofen einem reduzierendem Gasstrom ausgesetzt wird.

Die erfindungsgemäßen Boratsalze sind damit besonders als Leitsalze oder Additive für elektrochemische Zellen geeignet. Sie sind für die Verwendung in Batterien, insbesondere Lithiumionen-Batterien, und Superkondensatoren geeignet.

Nachfolgend wird ein allgemeines Beispiel der Erfindung näher erläutert.

Zur Herstellung der erfindungsgemäßen Boratsalze wird ein Lithiumtetraalkoholatoborat oder ein 1:1 Gemisch aus Lithiumalkoholat mit einem entsprechenden Borsäureester in einem aprotischen Lösungsmittel vorgelegt. Diese Lösung wird gegebenenfalls etwas erwärmt, so daß das Borat in Lösung geht.

Für die Reaktion geeignete Lithiumtetraalkoholatoborate sind die Derivate des Methanol, Ethanol, Propanol aber auch anderer kurzkettiger Alkohole. Besonders bevorzugt wird jedoch mit den Derivaten des Methanol oder Ethanol gearbeitet, da diese Alkohole sich aufgrund ihres niedrigen Siedepunktes nach erfolgter Komplexbildung bei relativ niedrigen Temperaturen aus dem Reaktionsgemisch entfernen lassen.

Zur Komplexbildung wird eine geeignete Hydroxyl- oder Carboxylverbindung im Verhältnis 2:1 oder 4:1, falls notwendig unter Schutzgasatmosphäre, bei Raumtemperatur zugegeben. Zur Vervollständigung der Reaktion wird die Reaktionslösung gegebenenfalls bei einer Temperatur zwischen 60 bis 150°C, vorzugsweise zwischen 60 bis 120°C, für einige Zeit nachgerührt. Das Nachrühren kann sich bei sehr schnell verlaufenden Komplexbildungsreaktionen erübrigen.

Es können aprotische Lösungsmittel, vorzugsweise ausgewählt aus der Gruppe Acetonitril, Aceton, Nitromethan, Dimethylformamid, Toluol, Dimethylcarbonat, Diethylcarbonat, Dimethylacetamid und Dimethylsulfoxid, verwendet werden. Besonders bevorzugt wird Toluol eingesetzt.

Unter Anlegen eines leichten Vakuums und evtl. durch leichtes Erwärmen auf etwa 50 bis 60°C wird der während der Reaktion gebildete Alkohol, falls dieser bei der nachfolgenden Isolierung des hergestellten Komplexsalzes stört, abgetrennt. Je nach Löslichkeit des hergestellten Lithiumkomplexsalzes im verwendeten aprotischen Lösungsmittel wird die Reaktionslösung eingeengt, bzw. das Lösungsmittel vollständig abdestilliert und sofern nicht spontan eine Auskristallisation erfolgt, für mehrere Stunden auf eine Temperatur von 0 bis 10°C abgekühlt. Das kristalline Produkt wird in üblicher Weise abgetrennt und durch langsames Erwärmen getrocknet.

Zur Komplexbildung in Frage kommen insbesondere Alkoholate und in benachbarten Positionen hydroxylierte Dialkoholate, wie Perfluorpinakolat, Perfluorglycolat und 1,2-Dihydroxyperfluorpropylat.

Die nachfolgenden Beispiele sollen die Erfindung näher erläutern, ohne sie jedoch zu beschränken.

Beispiele

Beispiel 1

Darstellung von Lithiumbis[perfluorpinakolyl-O,O'(2-)]borat(1-)

2 mol Perfluorpinakol werden in Toluol gelöst. Diese Lösung wird zu einer Suspension aus 1 mol Lithiummethanolatoborat in Toluol gegeben. Das Reaktionsgemisch wird auf 100°C erhitzt und das entstehende Methanol abdestilliert.
Beim Abkühlen fallen farblose, nadelförmige Kristalle aus.
Das Salz wird durch Umkristallisation gereinigt und im Vakuum bis zur Gewichtskonstanz getrocknet.

Beispiel 2

Elektrochemische Stabilität der Elektrolyten in EC/DMC

In einer Meßzelle mit Platinelektrode, Lithiumgegenelektrode und Lithiumreferenzelektrode wurden jeweils mehrere Zyklovoltammogramme hintereinander aufgenommen. Hierzu wurde ausgehend vom Ruhepotential das Potential zuerst mit einer Vorschubgeschwindigkeit von 20 mV/s auf 6V gegen $Li/Li^+$ erhöht und im weiteren Verlauf zurück auf das Ruhepotential gefahren.
Es zeigt sich der in Abbildung 1 angegebene charakteristische Verlauf. Der Elektrolyt ist somit für einen Einsatz in Lithium-Ionen-Batterien mit Übergangsmetallkathode geeignet.

Beispiel 3

Ionische Leitfähigkeit des Leitsalzes in EC/DMC

| Leitsalz | Lösungsmittel (1:1) | Leitfähigkeit [mS/cm] |
|---|---|---|
| Lithiumbis[perfluorpinakolyl-O,O'(2-)]borat(1-) | EC/DMC | 5,4 |
| $LiPF_6$ | EC/DMC | 5,0 |
| $Li[N(SO_2CF_3)_2]$ | EC/DEC | 5,8 |

Die Konzentration des Leitsalzes im Lösungsmittel beträgt 0,3 mol/l. Die Messungen wurden bei einer Temperatur von 25°C durchgeführt.
Die erfindungsgemäßen Salze besitzen für die Anwendung in elektrochemischen Zellen interessante Leitfähigkeiten, die mit bekannten Leitsalzen wie Lithiumhexafluorophosphat oder Lithiumimid vergleichbar sind.

Beispiel 4

Darstellung von Tetramethylphosphonium bis[oxalato-O,O'(2-)]borat (1-) über Lithium bis[oxalato-O,O'(2-)]borat(1-)

Lithium bis[oxalato-O,O'(2-)]borat (1-) (hergestellt nach DE 198 29 030) wird in Acetonitril bei Raumtemperatur mit Tetramethylphosphoniumchlorid zu Tetramethylphosphonium bis[oxalato-O,O'(2-)]borat (1-) umgesetzt. Das entstandene Lithiumchlorid wird bei 50°C abfiltriert und das Produkt aus Acetonitril/Methyl-tert. butylether umkristallisiert.

Beispiel 5

Darstellung von Tetraethylammonium bis[oxalato-O,O'(2-)]borat (1-)

Oxalsäure, Tetraethylammoniumhydroxyd und Borsäure werden im Molverhältnis 2:1:1 in Toluol suspendiert. Nachdem die bei der Reaktion entstandene stöchiometrische Menge Wasser azeotrop entfernt wurde, wird das Rohprodukt mehrmals in Acetonitril/DMC umkristallisiert.
Analog kann die Reaktion, anstatt in Toluol auch in jedem anderen aprotischen Lösungsmittel durchgeführt werden, das mit Wasser ein azeotrop bildet. Hierbei hat sich insbesondere Diethylcarbonat bewährt, in dem das Rohprodukt auch gleich umkristallisiert werden kann.

$^1$H-NMR (200MHz, DMSO, TMS)

1,2 ppm (t)

3,20 ppm (q)

Beispiel 6

Darstellung von Lithium bis[malonato-O,O'(2-)]borat (1-)

Malonsäure, Lithiumcarbonat und Borsäure werden im Molverhältnis 2:0,5:1 in Toluol suspendiert. Nachdem die bei der Reaktion entstandene stöchiometrische Menge Wasser azeotrop entfernt wurde, wird das Rohprodukt mehrmals aus Acetonitril umkristallisiert.

Anstatt Lithiumcarbonat kann auch Lithiumhydroxyd eingesetzt werden. Hierbei ändert sich das Molverhältnis Malonsäure: Lithiumhydroxyd: Borsäure auf 2:1:1.

$^1$H-NMR (200MHz, DMSO, TMS)

3,45 ppm (s)

Beispiel 7

Darstellung von Tetramethylphosphonium bis[malonato -O,O'(2-)] borat (1-) über Lithium bis[oxalato-O,O'(2-)]borat(1-)

Lithium bis[malonato-O,O'(2-)]borat (1-) wird in Acetonitril bei Raumtemperatur mit Tetramethylphosphoniumchlorid zu Tetramethylphosphonium bis[oxalato-O,O'(2-)]borat (1-) umgesetzt. Das entstandene Lithiumchlorid wird bei 50°C abfiltriert und das Produkt aus Acetonitril/Methyl-tert. butylether umkristallisiert.

Beispiel 8

Darstellung von Tetraethylammonium bis[malonato-O,O'(2-)]borat(1-)

Oxalsäure, Tetraethylammoniumhydroxyd und Borsäure werden im Molverhältnis 2:1:1 in Toluol suspendiert. Nachdem die bei der Reaktion entstandene stöchiometrische Menge Wasser azeotrop entfernt wurde, wird das Rohprodukt mehrmals in Acetonitril/DMC umkristallisiert.

Anstatt in Toluol kann die Reaktion analog auch in jedem anderen aprotischen Lösungsmittel durchgeführt werden, das mit Wasser ein azeotrop bildet. Hierbei hat sich insbesondere Diethylcarbonat bewährt, in dem das Rohprodukt auch gleich umkristallisieret werden kann.

**Patentansprüche**

**1.** Boratsalze der allgemeinen Formel

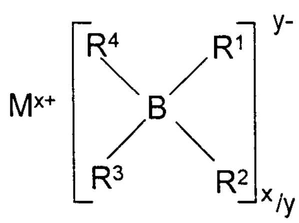

(I)

worin bedeuten:

M ein Metallion, Tetraalkylammoniumion, $PR^aR^bR^cR^d$, $P(NR^aR^b)_kR^c_mR^d_{4-k-m}$ (mit k=1-4, m=0-3

und k+m≤4), $C(NR^aR^b)(NRCR^d)(NR^eR^f)$, $C(R^z)_3$, Tropylium oder Heterocyclen mit P, N, S oder O oder diese enthaltende kondensierte heterocyclische Systeme

| | |
|---|---|
| mit $R^a$ bis $R^f$ | H, Alkyl und Aryl ($C_1$-$C_8$) die teilweise durch F, Cl oder Br substituiert sein können, |
| $R^z$ | Aromaten oder substituierte Aromaten |
| x,y | 1, 2, 3, 4, 5 oder 6 |
| $R^1$ bis $R^4$ | gleich oder verschieden, gegebenenfalls durch eine Einfach-oder Doppelbindung direkt miteinander verbunder Alkoxyoder Carboxyreste ($C_1$-$C_8$) sein können. |

**2.** Boratsalze entsprechend Anspruch 1, dadurch gekennzeichnet, daß M, x, y und $R^1$ bis $R^4$ die in Anspruch 1 angegebene Bedeutung haben und
$R^1$ bis $R^4$ optional teilweise oder vollständig durch elektronenziehende Gruppen substituiert sind, ausgewählt aus der Gruppe

$$F, Cl, N(C_nF_{(2n+1-x)}H_x)_2, O(C_nF_{(2n+1-x)}H_x), SO_2(C_nF_{(2n+1-x)}H_x)$$

mit

n 1, 2, 3, 4, 5 oder 6 und

x 0 bis 13.

**3.** Elektrolyt, enthaltend mindestens eine Verbindung der Ansprüche 1 und 2.

**4.** Elektrolyt nach Anspruch 3, enthaltend mindestens noch ein anderes Leitsalz oder Additiv.

**5.** Elektrochemische Zelle, enthaltend einen Elektrolyten nach Anspruch 3 oder 4.

**6.** Batterie oder Superkondensator nach Anspruch 5.

**7.** Verwendung der Boratsalze gemäß der Ansprüche 1 und 2 zur Herstellung von Elektrolyten für elektrochemische Zellen, Batterien bzw. Superkondensatoren.

Abb. 1

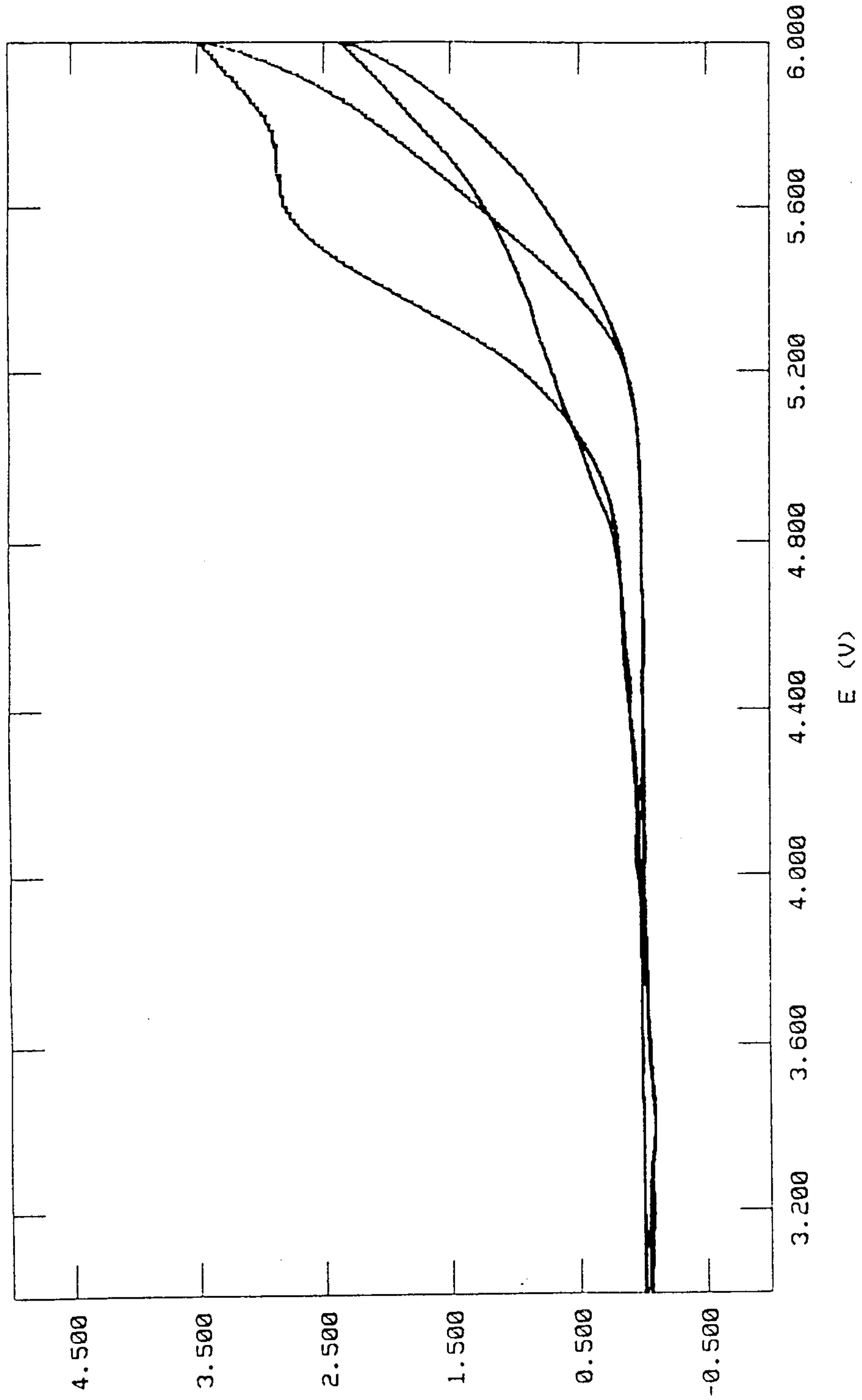
E (V)
3.200
3.600
4.000
4.400
4.800
5.200
5.600
6.000
4.500
3.500
2.500
1.500
0.500
-0.500